## Europäisches Patentamt
## European Patent Office
## Office européen des brevets

(11) Veröffentlichungsnummer: **0 239 676**
**B1**

(12) **EUROPÄISCHE PATENTSCHRIFT**

(45) Veröffentlichungstag der Patentschrift:
31.05.89

(21) Anmeldenummer: **86117388.8**

(22) Anmeldetag: **13.12.86**

(51) Int. Cl.⁴: **B23D 61/02**, B27B 33/08, B28D 1/18

(54) Sägeblatt.

(30) Priorität: **04.04.86 DE 3611207**

(43) Veröffentlichungstag der Anmeldung.
**07.10.87 Patentblatt 87/41**

(45) Bekanntmachung des Hinweises auf die Patenterteilung·
**31.05.89 Patentblatt 89/22**

(84) Benannte Vertragsstaaten:
**AT BE CH DE FR GB IT LI LU NL SE**

(56) Entgegenhaltungen:
**EP-A- 0 141 042**
**WO-A-85/01242**
**DE-A- 3 405 407**
**FR-A- 790 329**
**US-A- 1 083 645**

(73) Patentinhaber: **AVOLA Maschinenfabrik A. Volkenborn GmbH + Co. KG. Hauptstrasse 13,
D-5620 Velbert 11(DE)**

(72) Erfinder: **Volkenborn, Kurt, Frohnstrasse 48,
D-5620 Velbert 11 - Langenberg(DE)**

(74) Vertreter: **Weisse. Jürgen, Dipl.-Phys. et al,
Patentanwälte Dipl.-Phys. Jürgen Weisse Dipl.-Chem.
Dr. Rudolf Wolgast Bökenbusch 41 Postfach 11 03 86,
D-5620 Velbert 11 Langenberg(DE)**

ACTORUM AG

## Beschreibung

### TECHNISCHES GEBIET

Die Erfindung betrifft ein Sägeblatt für Kreissägen, bei welchem vom Rand aus sich im wesentlichen radial einwärts erstreckende Einschnitte im Randbereich vorgesehen sind.

Speziell bezieht sich die Erfindung auf das Problem der Geräuschdämpfung bei umlaufenden Sägeblättern.

Es kann sich dabei um Kreissägeblätter handeln, die zur spanenden Bearbeitung von Werkstoffen, wie Holz, Kunststoff oder Metall, mit definierten Schneiden (=Sägezähnen) ausgestattet sind. Es können aber auch Kreissägeblätter sein, wie sie zur Steinbearbeitung Verwendung finden. Diese sind am Umfang mit Segmenten besetzt, in welchen schleifende Körner vorzugsweise aus Hartmetallen und Diamanten eingebettet sind und die undefinierte Schneiden bilden.

### ZUGRUNDELIEGENDER STAND DER TECHNIK

Durch FR-A 790 329 ist es bekannt, Kreissägeblätter mit Schlitzen zu versehen. Das sind Dehnungsschlitze, welche zur Erhöhung der Blattsteifigkeit die thermische Ausdehnung bei der Erwärmung des Sägeblattes im Betrieb aufnehmen soll. Durch diese Schlitze wird das Sägeblatt auch durchlüftet, wodurch zusätzlich eine Kühlung des Sägeblattes erfolgen soll.

Durch Schlitze in dem Kreissägeblatt wird die Blattsteifigkeit herabgesetzt, wodurch eine erhöhte Verkantungsgefahr gegeben ist. Durch EP-A 1-0 141 042 ist ein Kreissägeblatt bekannt, bei welchem durch geeignete Neigung und Breite der Schlitze eine Verwindung des Kreissägeblattes entgegengewirkt und die Blattsteifigkeit erhöht werden soll. Auch hier dienen die Schlitze zur Aufnahme der Wärmeausdehnung des Kreissägeblattes. Es wird erwähnt, daß die Schlitze durch Schwingungsunterbrechung eine Lärmverminderung hervorrufen.

In US-A 1 083 645 werden Kreissägeblätter beschrieben, welche, ebenfalls zur Aufnahme der im Betrieb auftretenden thermischen Ausdehnung, Schlitze zwischen dem Mittenbereich und dem Rand aufweisen. Zur Erhöhung der Blattsteifigkeit sind die Schlitze bogenförmig ausgebildet, wodurch die Kraftübertragung von der Mitte des Sägeblattes zu dem gezahnten Rand durch eine möglichst tangentiale Zugkraft erfolgen soll.

Kreissägemaschinen erzeugen erheblichen Lärm. Dieser Lärm wird im wesentlichen durch Schwingungen des Sägeblattes hervorgerufen. Durch DE-A1-3 405 407 sind Kreissägeblätter bekannt, die zur Geräuschdämpfung durch schlangenförmige Unterbrechungslinien unterteilt sind. Durch die Schlangenförmigkeit der Unterbrechungslinien werden dabei Verbindungsausbuchtungen gebildet, durch welche die Reibwirkung der Schlitzflächen während der gesamten Lebensdauer des Kreissägeblattes gewährleistet sein soll.

In WO-A1-85/01 242 wird ein Sägeblatt beschrieben, bei welchem vom Umfang des Sägeblattes vom Grund eines Spanraumes ausgehende Einschnitte vorgesehen sind, die jeweils schneckenförmig enden oder in einem kreisrunden Durchbruch auslaufen, wodurch die Schlitze gesichert sein sollen. Auch hier handelt es sich um Dehnungsschlitze, welche die thermische Ausdehnung bei der Erwärmung des Sägeblattes im Betrieb aufnehmen soll. Durch die Schlitzsicherungen wird auch eine gewisse Lärmunterdrückung erzielt.

Sägeblätter für Steintrennsägen haben üblicherweise einen kreisrunden Umfang ohne Zähne mit in regelmäßigen Abständen angebrachten Schlitzen. Ein Rand längs des Umfangs ist mit einem Abrieb- oder Schleifmaterial besetzt.

### OFFENBARUNG DER ERFINDUNG

Der Erfindung liegt die Aufgabe zugrunde, ein möglichst leises und stabiles Sägeblatt zu schaffen.

Erfindungsgemäß wird diese Aufgabe bei einem Sägeblatt mit Einschnitten am Umfang dadurch gelöst, daß

a) die Einschnitte wellenförmig verlaufen und

b) im Innenbereich des Sägeblattes eine nicht durch Einschnitte unterbrochene, ringförmige Spannungszone ausgebildet ist.

Es hat sich überraschenderweise gezeigt, daß sich durch solche wellenförmige Einschnitte eine erhebliche Verminderung des durch das Sägeblatt hervorgerufenen Lärms erzielen läßt, ohne, daß die mechanische Stabilität des Sägeblattes beeinträchtigt wird.

Bei den oben aufgeführten, zum Stand der Technik gehörenden Kreissägeblättern (US-A-1 083 645, EP-A1-0 141 042, WO-A1-85/01 242 und FR-A-790 329) verlaufen die Einschnitte nicht wellenförmig und es ist keine ringförmige Spannungszone vorgesehen.

Bei den Kreissägeblättern nach DE-A1-3 405 407 erstrecken sich die schlangenförmigen Unterbrechungslinien bis in oder nahe an die Mittelbohrung oder das Sägeblatt wird durch die schlangenförmigen Unterbrechungslinien in mindestens zwei Teile unterteilt. Dadurch ist keine stabilitätserhöhende, ringförmige Spannungszone gegeben.

Weitere Ausgestaltungen der Erfindung sind Gegenstand der Unteransprüche.

### KURZE BESCHREIBUNG DER ZEICHNUNGEN

Ausführungsbeispiele der Erfindung sind nachstehend unter Bezugnahme auf die zugehörigen Zeichnungen näher erläutert.

Fig. 1 zeigt abgebrochen ein Sägeblatt für Kreissägen, das mit wellenförmigen Einschnitten versehen ist.

Fig. 2 zeigt in vergrößertem Maßstab die Zahnung des Sägeblattes.

Fig. 3 zeigt ein Sägeblatt für Steinkreissägen, das ebenfalls mit wellenförmigen Einschnitten zur Geräuschdämpfung versehen ist.

### BEVORZUGTE AUSFÜHRUNGEN DER ERFINDUNG

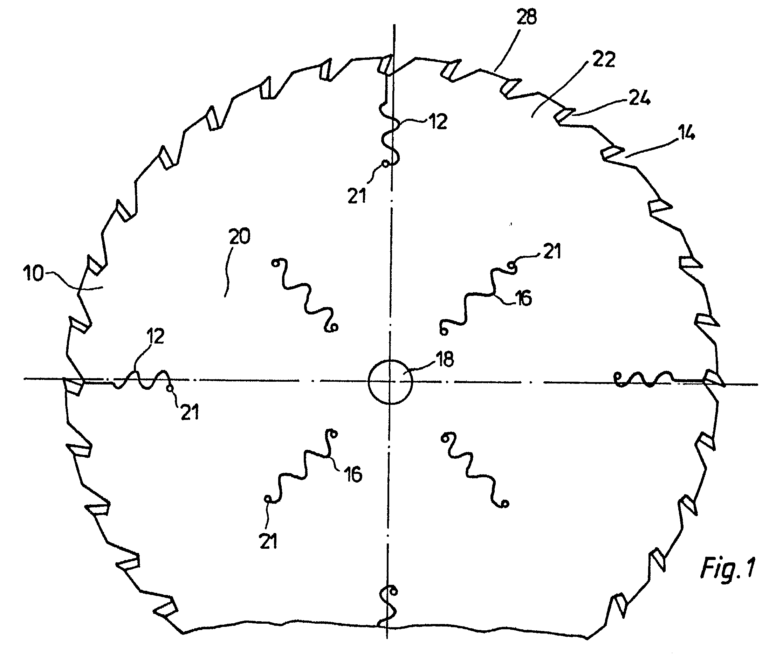

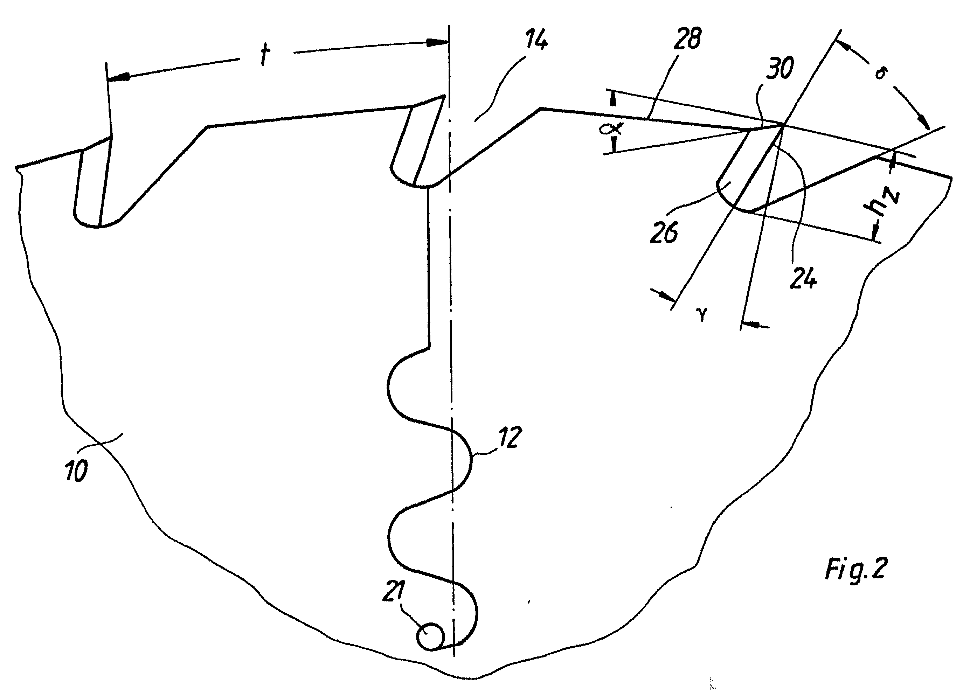

Das Sägeblatt 10 in Fig. 1 und 2 weist an seinem Umfang Einschnitte 12 auf, die sich im wesentlichen radial einwärts erstrecken und wellenförmig verlaufen. Die Einschnitte 12 gehen jeweils vom Grund eines Spanraumes 14 aus. Weitere sich im wesentlichen radial erstreckende und wellenförmig verlaufende Einschnitte 16 sind in dem Innenbereich des Sägeblattes jedoch im Abstand von einem zentralen Loch 18 vorgesehen. Die Einschnitte 16 im Innenbereich sind winkelmäßig jeweils zwischen benachbarten Einschnitten am Umfang angeordnet. Zwischen dem Bereich, in welchem die Einschnitte 12 am Umfang vorgesehen sind, und dem Bereich, in welchem die inneren Einschnitte 16 vorgesehen sind, ist eine nicht durch Einschnitte unterbrochene, ringförmige Spannungszone 20 ausgebildet.

Die Einschnitte 12 und 16 sind zum Beispiel mittels eines Laserstrahles oder einer Funkenerosion angebracht und nur wenige Hundertstelmillimeter breit. Sie enden in gerundeten Durchbrüchen 21. Zur Unterstützung der Geräuschdämpfung ist die Geometrie der Zahnung des Sägeblattes 10 besonders ausgebildet.

Bei der Ausführung nach Fig. 1 als Kreissägeblatt zur Holzbearbeitung ist der Spanraum 14 möglichst klein gemacht, allerdings noch so groß, daß er sich nicht zusetzen kann. Als Material für das Sägeblatt kann sowohl ein Vollstahlblatt z.B. in Chrom-Vanadiumstahl als auch ein Stammblatt mit Hartmetallbestückung – wie in der Darstellung abgebildet – Verwendung finden. In der Darstellung sind die Schneidkanten 24 der Zähne 22 von Hartmetalleinsätzen 26 gebildet. Es ist eine weitere Zahnteilung, d.h. eine geringe Zähnezahl, hier zweiunddreißig Zähne, mit langgestreckten Zahnrücken 28 vorgesehen (Fig. 2), wodurch die Spandicke begrenzt wird. Der Winkel γ zwischen den Schneidkanten 24 und den durch die Spitzen der Einsätze 26 verlaufenden Radien beträgt vorzugsweise 20°C. Ebenso beträgt der Winkel α zwischen dem Rücken 30 des Einsatzes 26 und der durch die Spitze des Einsatzes 26 verlaufenden Tangente vorzugsweise 20°. Der Winkel δ bezeichnet den Öffnungswinkel des Spanraums 14. Die Winkel γ und α können auch, je nach Einsatzzweck des Sägeblattes, kleiner oder größer sein.

Mit einem Sägeblatt der beschriebenen Art läßt sich gegenüber einem gleich großen Sägeblatt ohne Lärmschutzmaßnahmen eine Verbesserung des Lärmpegels bis etwa 10 dB(A) erzielen.

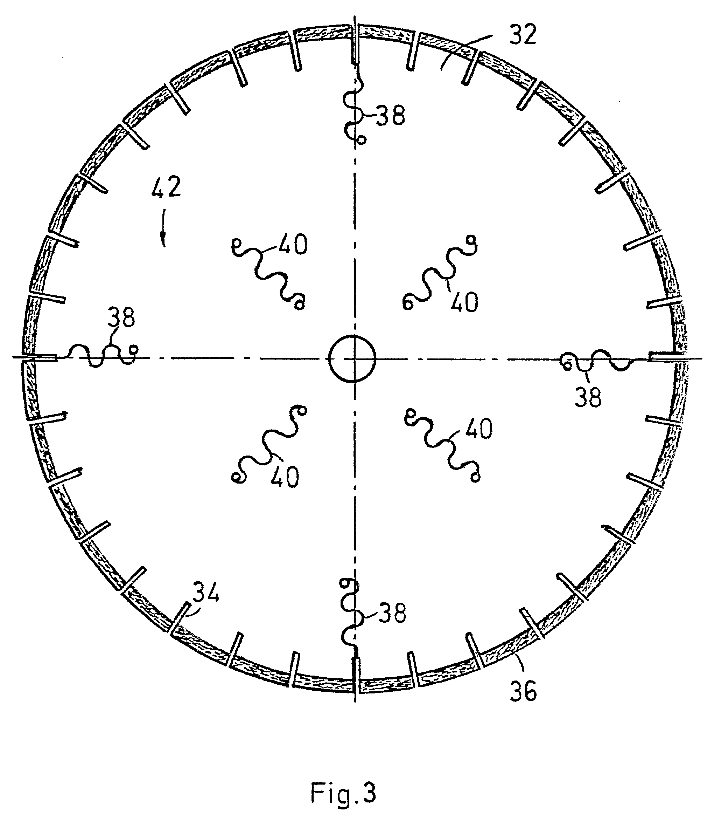

Fig. 3 zeigt ein Sägeblatt für eine Steintrennsäge, bei welchem in entsprechender Weise eine Geräuschdämpfung bewirkt wird.

Ein Sägeblatt 32 für eine Steintrennsäge weist einen kreisrunden Umfang ohne Zähne auf. Von dem Umfang gehen radiale Einschnitte 34 aus, die in gleichen Winkelabständen angeordnet sind. Ein Rand 36 längs des Umfangs ist mit einem Abrieb- oder Schleifmaterial besetzt. Das ist die übliche Ausbildung eines Sägeblattes für Steinkreissägen.

Vom Umfang, oder vom Grund einiger der Einschnitte 34, verlaufen wellenförmige Einschnitte 38 im wesentlichen radial einwärts. Bei der dargestellten Ausführung sind vier solcher wellenförmiger Einschnitte 38 jeweils um 90°C gegeneinander winkelversetzt angeordnet. Auch hier sind im Innenbereich des Sägeblattes 32 vier im wesentlichen radial sich erstreckende und wellenförmig verlaufende Einschnitte 40 angebracht. Die Einschnitte 40 sind um jeweils 90° gegeneinander und um 45° gegen die Einschnitte 38 winkelversetzt. Zwischen dem Bereich, in welchem die Einschnitte 38 vom Rand vorgesehen sind, und dem Bereich, in welchem die inneren Einschnitte vorgesehen sind, ist auch hier eine nicht durch Einschnitte unterbrochene, ringförmige Spannungszone 42 ausgebildet.

## Patentansprüche

1. Umlaufendes Sägeblatt von kreisförmiger Grundform, bei welchem vom Rand aus sich im wesentlichen radial einwärts erstreckende Einschnitte im Randbereich vorgesehen sind, dadurch gekennzeichnet, daß

a) die Einschnitte (12) wellenförmig verlaufen und

b) im Innenbereich des Sägeblattes (10) eine nicht durch Einschnitte unterbrochene, ringförmige Spannungszone (20) ausgebildet ist.

2. Sägeblatt nach Anspruch 1, dadurch gekennzeichnet, daß im Innenbereich des Sägeblattes (10) weitere, sich im wesentlichen radial erstreckende und wellenförmig verlaufende Einschnitte (16) vorgesehen sind.

3. Sägeblatt nach Anspruch 2, dadurch gekennzeichnet, daß die Einschnitte (16) im Innenbereich winkelmäßig zwischen den Einschnitten (12) vom Rand angeordnet sind.

4. Sägeblatt nach Anspruch 2, dadurch gekennzeichnet, daß die nicht durch Einschnitte unterbrochene, ringförmige Spannungszone (20) zwischen dem Bereich, in welchem die Einschnitte (12) vom Rand vorgesehen sind, und dem Bereich, in welchem die inneren Einschnitte (16) vorgesehen sind, ausgebildet ist.

5. Sägeblatt nach Anspruch 4, dadurch gekennzeichnet, daß die Einschnitte in gerundeten Durchbrüchen (21) enden.

6. Sägeblatt nach einem der Ansprüche 1 bis 5, dadurch gekennzeichnet, daß es ein mit schneidenden Zähnen versehenes Sägeblatt für Kreissägen ist.

7. Sägeblatt nach einem der Ansprüche 1 bis 5, dadurch gekennzeichnet, daß es als Sägeblatt für Steinkreissägen mit kreisrundem, mit Abrieb- und Schleifmaterial besetztem Rand ausgebildet ist.

## Claims

1. Rotating, generally circular saw blade in which cuts extending from the edge substantially inwards are provided in the edge region, characterized in that

a) the cuts (12) are undulating, and

b) an annular tension zone (20) not interrupted by cuts is formed in the central region of the saw blade (10).

2. Saw blade as set forth in claim 1, characterized in that further undulating cuts (16) extending substantially radially are provided in the central region of the saw blade (10).

3. Saw blade as set forth in claim 2, characterized in that the cuts (16) in the central region angularly are arranged between the cuts (12) extending from the edge.

4. Saw blade as set forth in claim 2, characterized in that the annular tension zone (20) is formed between the region in which the cuts (12) extending from the edge are provided, and the region in which the inner cuts (16) are provided.

5. Saw blade as set forth in claim 4, characterized in that the cuts terminate in rounded apertures (21).

6. Saw blade as set forth in anyone of the claims 1 to 5, characterized in that it is a saw blade provided with cutting teeth for circular saws.

7. Saw blade as set forth in anyone of the claims 1 to 5, characterized in that it is formed as saw blade for circular stone saws having a circular edge lined with abrasive and grinding material.

**Revendications**

1. Lame de scie rotative d'une forme généralement circulaire, dans laquelle des coupures s'étendant du bord essentiellement radialement vers l'intérieur sont prévues dans le domaine du bord, caractérisé par le fait que
a) les coupures (12) sont ondulées, et
b) une zone de tension annulaire (20) non interrompue par des coupures est formée dans le domaine central de la lame de scie (10).

2. Lame de scie selon la revendication 1, caractérisée par le fait que d'autres coupures (16) ondulées s'étendant essentiellement radialement sont prévues dans le domaine central de la lame de scie (10).

3. Lame de scie selon la revendication 2, caractérisée par le fait que les coupures (16) sont angulairement disposés entre les coupures (12) s'étendant du bord.

4. Lame de scie selon la revendication 2, caractérisée par le fait que la zone de tension annulaire (20) non interrompue par des coupures est formée entre le domaine dans lequel les coupures (12) s'étendant du bord sont prévues, et le domaine dans lequel les coupures intérieures sont prévues.

5. Lame de scie selon la revendication 4, caractérisée par le fait que les coupures débouchent dans des percements arrondis (21).

6. Lame de scie selon l'une quelconque des revendications 1 à 5, caractérisée par le fait qu'elle est une lame de scie pourvue de dents coupants pour des scies circulaires.

7. Lame de scie selon l'une quelconque des revendications 1 à 5, caractérisée par le fait qu'elle est formée comme lame de scie pour des scies circulaires en pierre avec un bord circulaire couvert d'une matière d'émeri et d'abraison.

Fig.1

EP 0 239 676 B1

Fig. 2

EP 0 239 676 B1

Fig.3